# EUROPÄISCHE PATENTANMELDUNG

(11) **EP 1 600 754 A2**
(43) Veröffentlichungstag der Anmeldung: **30.11.2005**
(21) Anmeldenummer: 05010966.9
(22) Anmeldetag: 20.05.2005
(51) Int. Cl.: G01M 15/00, G01M 17/007

(54) **Prüfvorrichtung für Kraftfahrzeuge**

(30) Priorität: 27.05.2004 DE 202004008647 U
(71) Anmelder: Cartec GmbH, 84579 Unterneukirchen (DE)
(72) Erfinder: Blatz, Uwe, 84579 Unterneukirchen (DE)
(74) Vertreter: Eder, Christian

(57) **Zusammenfassung**

Die Erfindung betrifft eine Prüfvorrichtung für Kraftfahrzeuge, mit einer Leistungsprüfeinheit (1) zur Ermittlung der mechanischen bzw. physikalischen Kenngrößen, insbesondere der Leistung, eines Kraftfahrzeuges (2), einer Abgasprüfeinheit (3) zur Ermittlung von Abgaswerten des Kraftfahrzeugs (2) und mit einer Steuereinheit (4), wobei die Steuereinheit (4) zur Ansteuerung der Leistungsprüfeinheit (1) und der Abgasprüfeinheit (3) ausgebildet ist.

## Beschreibung

Die vorliegende Erfindung betrifft eine Prüfvorrichtung für Kraftfahrzeuge, wie sie häufig in Werkstätten bzw. für technische Überwachungsaufgaben eingesetzt werden.

Aus dem Stand der Technik sind Prüfstände bekannt, die eine Leistungsprüfeinheit umfassen. Auf einer solchen Leistungsprüfeinheit werden üblicherweise abhängig von den jeweiligen Motordrehzahlen eines Kraftfahrzeuges die zugehörigen Drehmomente ermittelt, um so Aussagen über die Leistung des Fahrzeugs treffen zu können.

Weiterhin bekannt sind Abgasprüfeinheiten, mit denen die Zusammensetzung des Abgases eines zu testenden Kraftfahrzeugs untersucht werden kann. Dabei wird eine Sonde so im Auspuffbereich des Fahrzeugs angeordnet, dass die relevanten Werte des Abgases von der Sonde erfasst und der Abgasprüfeinheit zugeleitet werden. In Abhängigkeit der Drehzahl, der abgenommenen Leistung oder sonstiger Kraftfahrzeug-Kenngrößen verändern sich die entsprechenden Abgaswerte.

Nachteilig beim bisher bekannten Stand der Technik ist die Tatsache, dass die Leistungsprüfeinheit bzw. die Abgasprüfeinheit im wesentlichen unabhängig voneinander betrieben werden. Dies erhöht den zeitlichen und damit finanziellen Aufwand für die Prüfungen selber und die anschließende Auswertung der Daten.

Aufgabe der Erfindung ist es daher, eine verbesserte Prüfvorrichtung für Kraftfahrzeuge zu schaffen, die ein vereinfachtes und rationelleres Prüfungsverfahren ermöglicht und die Aussagekraft der aufgenommenen Daten besser veranschaulicht.

Die Aufgabe wird gelöst durch eine Prüfvorrichtung nach Anspruch 1.

Die Erfindung geht von der Erkenntnis aus, dass die gleichzeitige Ansteuerung einer Leistungsprüfeinheit und einer Abgasprüfeinheit durch eine gemeinsame Steuereinheit die Kraftfahrzeugprüfung erheblich vereinfacht. Die Steuereinheit ist dabei zur Ansteuerung der Leistungsprüfeinheit und der Abgasprüfeinheit ausgebildet und vermag dadurch eine optimierte zeitliche Ansteuerung der Prüfeinheiten bzw. Durchführung der jeweiligen Prüfungen zu realisieren.

Die Steuereinheit kann dabei als im wesentlichen separate Einheit ausgebildet sein oder auch Teil der Leistungsprüfeinheit oder der Abgasprüfeinheit sein. Wesentlich ist die übergeordnete Steuerungsfunktion der Steuereinheit für beide Komponenten.

In einer vorteilhaften Ausführungsform der Erfindung ist die Steuereinheit zur Aufnahme von Messdaten ausgebildet, die ihr von der Leistungsprüfeinheit und der Abgasprüfeinheit zuführbar sind. Dies bedeutet, dass nicht nur die Ansteuerung der Prüfeinheiten durch die Steuereinheit erfolgen kann, sondern auch die gezielte Sammlung der von beiden getrennten Komponenten erfassten Daten in einer Einheit, nämlich der Steuereinheit. Dies erübrigt die getrennte Aufbereitung und Speicherung der Daten in einer für jede Prüfeinheit vorzusehende Steuerung und vereinfacht damit den apparativen Aufwand. Die Handhabung vereinfacht sich dadurch vorteilhaft, gleichzeitig werden die Kosten für Personal bzw. Arbeitszeit verringert.

Eine weitere vorteilhafte Ausführungsform der erfindungsgemäßen Prüfvorrichtung sieht vor, dass die Steuereinheit auch zur Aufbereitung der ihr von der Leistungsprüfeinheit und von der Abgasprüfeinheit zugeführten Signale in entsprechende Daten ausgebildet ist. Insbesondere ist also vorgesehen, beispielsweise physikalische Größen, wie Spannung oder Strom, die von den Prüfeinheiten als Signale ausgesandt werden, in entsprechende Zahlenwerte der zu untersuchenden Größe umzuwandeln. Insbesondere soll die Steuereinheit so ausgebildet sein, dass beispielsweise aus einem Signal von 0 bis 20 mA, 0 bis 5 V oder ähnlichem ein absoluter Wert für beispielsweise das Drehmoment in Nm, eine Leistung in kW oder ein Gasanteil in % gebildet wird. Diese Daten sollen erfindungsgemäß durch die Steuereinheit gebildet bzw. zur weiteren Auswertung zur Verfügung gestellt werden.

Eine besonders vorteilhafte Ausführungsform der Erfindung sieht vor, dass die Steuereinheit zur zeitlich synchronisierten Darstellung der Daten der Leistungsprüfeinheit und der Abgasprüfeinheit ausgebildet ist. Hierbei wird sichergestellt, dass die von der Leistungsprüfeinheit einerseits und der Abgasprüfeinheit andererseits ermittelten Daten so einander gegenüber gestellt werden, dass die zum gleichen Zeitpunkt gemessenen oder die zum gleichen Zeitpunkt im Fahrzeug gebildeten Kenngrößen einander leicht zuzuordnen sind.

In der Praxis wird der Abgasstrom des zu testenden Fahrzeugs am Auspuff abgenommen und meist über eine Schlauchleitung der Abgasprüfeinheit zugeführt. Auch der Weg unmittelbar vom Motor bis zum Auslass des Auspuffrohres bedingt eine gewisse zeitliche Verzögerung, mit der das Abgas seit seiner Entstehung aufgenommen bzw. weitergeleitet werden kann. Die an der Leistungsprüfeinheit aufgenommenen Werte lassen sich dagegen ohne nennenswerte Verzögerung erfassen. In der Praxis werden also Änderungen der Motorleistung relativ zeitnah erfasst, während die mit der Leistungsänderung meist einhergehenden Änderungen der Abgaszusammensetzung durch die vorbeschriebenen Strömungswege nur mit einer zeitlichen Verzögerung erfasst werden können.

Erfindungsgemäß ist die Steuereinheit nun so ausgebildet, dass eine solche zeitliche Verzögerung ausgeglichen bzw. korrigiert dargestellt werden kann. Durch geeignete Parameterwahl kann somit die einer bestimmten Motorleistung unmittelbar zuzuordnende Abgaszusammensetzung entsprechend ohne zeitliche Verzögerung gegenübergestellt bzw. dargestellt werden.

Dies bringt den Vorteil mit sich, dass Änderungen der Leistung bzw. der Abgaszusammensetzung in einen leichter zu erkennenden Zusammenhang zu bringen sind. Je nach Art der Bereitstellung dieser einander gegenüber gestellten Daten kann das Bedienpersonal erheblich einfacher die jeweiligen Zusammenhänge für mögliche Störungen oder sonstige Abhängigkeitsverhältnisse erkennen und daher zielgerichteter und zeit- bzw. geldsparend vorgehen.

Die Art und Weise bzw. der Ablauf, wie die Daten der beiden Prüfeinheiten erfasst und gegenübergestellt werden, kann dabei flexibel gewählt werden. Denkbar ist beispielsweise, dass die Daten der Messungen gleichzeitig aufgenommen und dann um ein empirisch ermitteltes Maß gegeneinander so zeitig verschoben werden, dass eine exakte Übereinstimmung der Motorleistung mit der aktuell dadurch bedingten Abgaszusammensetzung erzielt wird. Alternativ ist es möglich, die aufgenommenen Daten jeweils - etwa auch bei nacheinander verlaufenden Messungen - in einer Speichereinheit der Steuereinheit abzulegen, um sie im Anschluss an die Messung zu synchronisieren.

Eine weitere vorteilhafte Ausführungsform der Erfindung sieht vor, dass die Steuereinheit zur Ermittlung und Ausgabe von Abhängigkeiten zwischen den Daten der Leistungsprüfeinheit und der Abgasprüfeinheit ausgebildet ist. In diesem Fall ist die Steuereinheit nicht nur zur zeitlich korrekten Gegenüberstellung der jeweiligen Prüfdaten in der Lage, sondern sie vermag darüber hinaus automatisch bestimmte wechselseitige Abhängigkeiten zu ermitteln. So ist beispielsweise denkbar, dass eine Veränderung der Leistungsdaten dann durch die Steuereinheit besonders hervorgehoben oder ausgewiesen wird, wenn dieser Änderung gleichzeitig eine Änderung der Abgasdaten gegenübersteht. Durch geeignete Parameterwahl, beispielsweise für das erforderliche Maß der Änderung pro Zeiteinheit, kann die Sensibilität der Steuereinheit hinsichtlich dieser Zusammenhänge frei eingestellt werden. Durch eine solche quasi selbsttätige Erkennung von Korrelationen wird die eigentliche Prüfarbeit des Bedienungspersonals erheblich erleichtert, wodurch wiederum Arbeitszeit und Kosten eingespart werden.

Die erfindungsgemäße Prüfvorrichtung ist vorteilhaft so ausgebildet, dass sie zur Ausgabe der in ihr erfassten bzw. gebündelten Daten ausgebildet ist. Die Ausgabe kann insbesondere über einen Monitor, ein Display oder einen Drucker erfolgen. Grundsätzlich ist auch die Ausgabe von akustischen Signalen denkbar, beispielsweise im Zusammenhang mit festgestellten Korrelationen oder Über- bzw. Unterschreitung von zulässigen Maximalwerten.

Insgesamt stellt die vorgenannte Erfindung eine erheblich Hilfe zur Fehlersuche bzw. Diagnose von Störungen im Kfz-Betrieb dar, in dem bisher getrennt ausgewertete Kenngrößen erfindungsgemäß synchronisiert einander gegenüberstellbar sind.

Weitere vorteilhafte Ausführungsformen ergeben sich aus den Unteransprüchen.

Eine Ausführungsform der Erfindung wird nachfolgend anhand des Figurenbeispiels beschrieben.

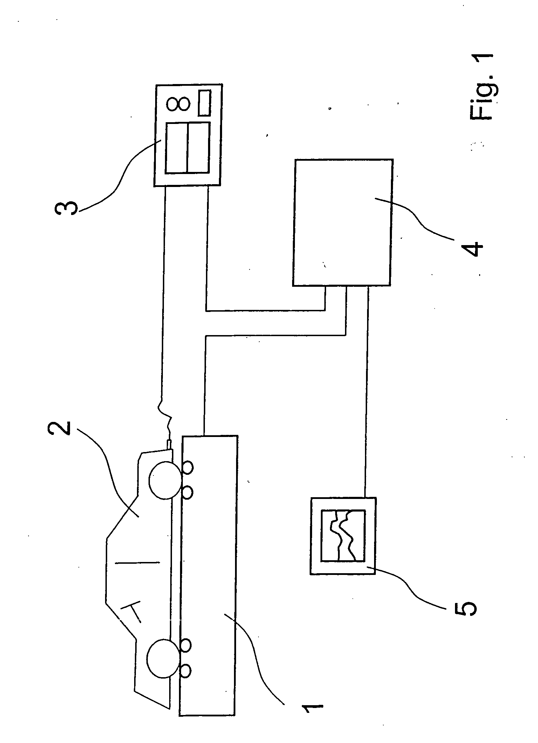

Die einzige Fig. 1 zeigt eine Prüfvorrichtung, bei der auf einer Leistungsprüfeinheit 1 ein Kraftfahrzeug 2 angeordnet ist. Die Leistungsprüfeinheit 1 ist zur Aufnahme von Betriebsdaten des Kraftfahrzeugs (insbesondere Motordrehzahl und Drehmoment) ausgebildet. Die Leistungsprüfeinheit 1 ist mit einer Steuereinheit 4 verbunden. Die Steuereinheit 4 ist zur Ansteuerung mit der Leistungsprüfeinheit 1 und zur Aufnahme der von der Leistungsprüfeinheit 1 übermittelten Messdaten bzw. Messsignalen ausgebildet.

Eine Abgasprüfeinheit 3, die zur Abnahme der Auspuffabgase des Kraftfahrzeugs 2 mit einer nicht näher dargestellten Messsonde ausgerüstet ist, ist ebenfalls mit der Steuereinheit 4 verbunden. Auch hier ist die Steuereinheit 4 zur Ansteuerung der Abgasprüfeinheit 3 und zur Aufnahme der von der Abgasprüfeinheit 3 übermittelten Signale bzw.
Messdaten ausgebildet.

Die schematisch dargestellte Steuereinheit 4 stellt die von der Leistungsprüfeinheit 1 erbrachten Signale bzw. Daten den von der Abgasprüfeinheit 3 erbrachten und möglicherweise zeitverzögert ermittelten Signale bzw. Daten so synchronisiert gegenüber, dass die einem bestimmten Betriebszeitpunkt zugehörigen Daten beider Prüfeinheiten anschaulich zueinander zugeordnet darstellbar sind.

Die in der Steuereinheit 4 verarbeiteten Signale bzw. Daten sind in einer nicht näher dargestellten Speichereinheit speicherbar.

Die Steuereinheit 4 ist mit einer Ausgabeeinrichtung 5 verbunden, die im vorliegenden Beispiel als Bildschirm dargestellt ist. Über den Bildschirm lassen sich die synchronisiert aufbereiteten Daten der Abgasprüfeinheit 3 und der Leistungsprüfeinheit 1 zueinander zugeordnet darstellen. Ergänzend oder alternativ können die Daten der Steuereinheit 4 auch über einen nicht dargestellten Drucker ausgegeben werden.

## Patentansprüche

1. Prüfvorrichtung für Kraftfahrzeuge, mit
a) einer Leistungsprüfeinheit (1) zur Ermittlung der mechanischen bzw. physikalischen Kenngrößen, insbesondere der Leistung, eines Kraftfahrzeuges (2), und
b) mit einer Abgasprüfeinheit (3) zur Ermittlung von Abgaswerten des Kraftfahrzeugs (2), und
c) mit einer Steuereinheit (4),
d) wobei die Steuereinheit (4) zur Ansteuerung der Leistungsprüfeinheit (1) und der Abgasprüfeinheit (3) ausgebildet ist.

2. Prüfvorrichtung nach Anspruch 1, **dadurch gekennzeichnet, dass** der Steuereinheit (4) Messsignale der Leistungsprüfeinheit (1) und der Abgasprüfeinheit (3) zuführbar sind.

3. Prüfvorrichtung nach Anspruch 2, **dadurch gekennzeichnet, dass** die Steuereinheit (4) zur Aufbereitung der ihr von der Leistungsprüfeinheit (1) und von der Abgasprüfeinheit (3) zugeführten Signale in entsprechende Daten ausgebildet ist.

4. Prüfvorrichtung nach Anspruch 2 oder 3, **dadurch gekennzeichnet, dass** die Steuereinheit (4) zur zeitlich synchronisierten Darstellung der Signale oder Daten der Leistungsprüfeinheit (1) und der Abgasprüfeinheit (3) ausgebildet ist.

5. Prüfvorrichtung nach einem der Ansprüche 2 bis 4, **dadurch gekennzeichnet, dass** die Steuereinheit (4) zur Ermittlung und Ausgabe von Abhängigkeiten zwischen den Signalen oder Daten der Leistungsprüfeinheit (1) und der Abgasprüfeinheit (3) ausgebildet ist.

6. Prüfvorrichtung nach einem Ansprüche 2 bis 5, **dadurch gekennzeichnet, dass** eine Ausgabeeinheit (5) zur Ausgabe der Signale oder Daten vorgesehen ist, die der Steuereinheit (4) zugeführt und/oder in ihr aufbereitet werden.

7. Prüfvorrichtung nach Anspruch 6, **dadurch gekennzeichnet, dass** die Ausgabeeinheit (5) ein Monitor, Display oder Drucker ist.
